# EUROPÄISCHE PATENTSCHRIFT

(11) **EP 3 408 857 B1**
(45) Veröffentlichungstag und Bekanntmachung des Hinweises auf die Patenterteilung: **29.05.2019**
(21) Anmeldenummer: 17702331.4
(22) Anmeldetag: 25.01.2017
(51) Int. Cl.: H01G 2/10, H01G 4/236, H01G 4/32, H01G 11/82, H01G 9/08, H01G 4/228

(54) **NIEDERINDUKTIVER ELEKTRISCHER AUSSENANSCHLUSS FÜR IN EINEM GEHÄUSE ANGEORDNETE WICKEL ELEKTRISCHER LEISTUNGSKONDENSATOREN**
LOW-INDUCTANCE ELECTRIC OUTER CONNECTION FOR COILS OF ELECTRIC POWER CAPACITORS ARRANGED IN A HOUSING
CONNECTEUR ÉLECTRIQUE EXTERNE FAIBLEMENT INDUCTIF POUR BOBINAGES, PLACÉS DANS UN BOÎTIER, DE CONDENSATEURS ÉLECTRIQUES DE PUISSANCE

(30) Priorität: 28.01.2016 DE 102016000931
(43) Veröffentlichungstag der Anmeldung: 05.12.2018
(73) Patentinhaber: Electronicon Kondensatoren GmbH, 07548 Gera (DE)
(72) Erfinder: DIETZEL, Gerd, 07549 Gera (DE); GEITNER, Volker, 07557 Hundhaupten (DE); SCHULZE, Manfred, 07548 Gera (DE)
(74) Vertreter: Kruspig, Volkmar
(86) Internationale Anmeldenummer: PCT/EP2017/051553
(87) Internationale Veröffentlichungsnummer: WO 2017/129620

(56) Entgegenhaltungen:
- JP-A- 2000 208 359
- JP-A- 2009 177 055
- US-A- 3 037 070
- US-A1- 2012 282 502

## Beschreibung

Die Erfindung geht aus von einem niederinduktiven elektrischen Außenanschluss für in einem Gehäuse angeordnete Wickel elektrischer Leistungskondensatoren, wobei die internen Anschlussmittel und der Außenanschluss als niederinduktive Verschienung ausgebildet sind und der jeweilige Außenanschluss flächig ausgeführt ist sowie jeweils eine Abwinklung aufweist, gemäß Oberbegriff des Anspruchs 1.

Aus der DE 10 2008 050 707 B9 ist ein niederinduktiver, teilentladungsarmer, elektrischer Gehäusedurchführungs-Außenanschluss für gekapselte elektronische Bauelemente, insbesondere Leistungskondensatoren vorbekannt.

Die dortige Lösung umfasst einen Anschlussgewindebolzen oder eine mit einem Innengewinde versehene Anschlussbuchse. Der Bolzen oder die Buchse weist einen bezogen auf eine Gehäusedurchführung inneren Flansch auf sowie einen auf den Bolzen oder die Buchse aufschieb- oder aufsetzbaren Isolatorkörper. Weiterhin ist eine zwischen dem Flansch und der Gehäusedurchführung wirkende Dichtung vorhanden. Darüber hinaus umfasst die vorbekannte Lösung Mittel zum mechanischen Fixieren und Verspannen der vorgenannten Bauteile, insbesondere ausgebildet als Mutter. Die Dichtung ist gemäß der dortigen Erfindungslehre als pilzförmiger Körper ausgeführt, wobei der Pilzkopf einen Durchmesser größer als die Gehäusedurchführung aufweist und der Pilzhut im Wesentlichen dem Gehäusedurchführungs-Durchmesser entspricht.

Mit einer solchen Lösung ist es möglich, die Endmontage, d.h. die Komplettierung von vorbereiteten Gehäuseeinbauten, insbesondere Kondensator-Wickelpaketen in einfacher Weise durchzuführen, wobei die Endmontage bevorzugt von außen möglich ist, ohne dass Positionierprobleme auch bei großflächigen Anordnungen mit vielen Durchführungen und hohen Toleranzanforderungen auftreten.

Bei dem elektrischen Kondensator mit Kapazitätseinrichtung und einem elektrisch leitenden in Richtung einer ersten Achse verlaufenden, mit der Kapazitätseinrichtung elektrisch leitend verbundenem ersten und zweiten Anschlusselement gemäß DE 10 2014 110 053 A1 sind erste und zweite Anschlusselemente elektrisch voneinander isoliert angeordnet und durch das Gehäuse hindurch nach außen verlaufend orientiert. Das zweite Anschlusselement ist als Rohr ausgeführt und weist eine erste und zweite Rohröffnung auf, wobei das erste Anschlusselement durch die erste und zweite Rohröffnung hindurch verläuft. Mit dieser Anordnung soll eine geringe Induktivität der Anschlusselemente erreichbar sein.

Bei dem Wickelkondensator mit reduzierter Eigeninduktivität nach DE 36 09 040 A1 sind die Wickel in einem Gehäuse eingebaut. Die Wickel befinden sich auf einem Kernrohr, dessen äußere Anschlüsse über Anschlusselemente, die symmetrisch und im Wesentlichen deckend übereinander und gegeneinander isolierend angeordnet sind, mit Elektroden verbunden werden.

Die dortige Lehre zielt auf Anschlusselemente und äußere Anschlüsse in Form niederinduktiver Verschienungen, die übergangslos in die eigentlichen äußeren Anschlusselemente übergehen.

Bei einer Ausführungsform werden Bandleiter eingesetzt und es weisen die äußeren Anschlusselemente im Anschlussbereich eine Abwinklung auf.

JP 2000 208359 offenbart einen niederinduktiven elektrischen Außenanschluss für in einem Gehäuse angeordnete Wickel elektrischer Leistungskondensatoren, wobei die internen Anschlussmittel und der Außenanschluss als niederinduktive Verschienung ausgebildet sind und der jeweilige Außenanschluss flächig ausgeführt ist sowie jeweils eine Abwinklung aufweist. Die internen Anschlussmittel weisen zwei beabstandete Schienen auf, wobei jede Schiene mit einem der abgewinkelten, flächigen Außenanschlüsse durch eine Leitung in Verbindung steht, die Abwinklung sich im Abstandsraum zwischen den Schienen befindet und sich ausgehend von einer mit einem Deckel verschließbaren Gehäuseoberseite weiter nach oben erstreckt. Es befindet sich im Abstandsraum ein Isolationsteil.

Aus dem Vorgenannten ist es Aufgabe der Erfindung, einen weiterentwickelten niederinduktiven elektrischen Außenanschluss für in einem Gehäuse angeordnete Wickel von elektrischen Leistungskondensatoren anzugeben, derart, dass eine einfache Montage von außen erfolgen kann, wobei die Funktionen einer gasdichten Führung, einer in diesem Sinne hermetischen Abdichtung und einer hohen Stromtragfähigkeit in gleichem Maße zu erfüllen sind. Die zu schaffenden Außenanschlüsse sollen in der Lage sein, Ströme bis zu 1000 A und mehr zu führen.

Es sei an dieser Stelle darauf hingewiesen, dass Kondensatoren, insbesondere Gleichspannungskondensatoren in prismatischen Gehäusen, z.B. zur Anwendung in Zwischenkreisen von Umrichtern oder Filterkreisen zum Stand der Technik gehören. Bei derartigen Kondensatoren werden üblicherweise prismatische Stahl- oder Aluminiumgehäuse genutzt, die die Kondensator-Wickelpakete aufnehmen. Diese Gehäuse werden gasdicht mit einem Kunstharz verfüllt. Ziel der Anschlussverbindungen ist der Erhalt einer möglichst geringen Induktivität und die Sicherstellung einer hohen Stoßstromfestigkeit.

Um die Eigeninduktivität derartiger Kondensatoren gering zu halten, kommen Flachanschlüsse zum Einsatz.

Die Herstellung der Wickelkondensatoren, das Einsetzen dieser in ein Gehäuse nebst Vergießen kann in hohem Maße automatisiert und mit hoher Zuverlässigkeit und geringen Kosten umgesetzt werden. Die Montage der Anschlussterminals ist jedoch nach wie vor konstruktiv schwierig umzusetzen und führt oftmals zu Lösungen, die herstellungsseitig unvertretbar hohe Aufwendungen nach sich ziehen.

Bei der erfindungsgemäßen Lösung hingegen wird unter Rückgriff auf eine niederinduktive Verschienung nebst großflächigen Anschlussstromschienen für die externe Kontaktierung ein Ansatz für eine kostengünstige Fertigung geschaffen, ohne dass für das Produkt nachteilige Kompromisse hinsichtlich der geforderten hermetischen Kapselung auftreten.

Es wird also auf einen niederinduktiven elektrischen Außenanschluss für in einem Gehäuse angeordnete Leistungskondensatoren abgestellt, wobei die internen Anschlussmittel und der Außenanschluss als niederinduktive Verschienung ausgebildet sind. Der Außenanschluss ist, wie bereits dargelegt, als großflächiges Anschlussblech z.B. aus Kupfermaterial realisiert, wobei der jeweilige Außenanschluss eine Abwinklung aufweist.

Die internen Anschlussmittel umfassen erfindungsgemäß zwei beabstandete Schienen. Jede der Schienen steht mit einem der abgewinkelten, flächigen Außenanschlüsse in Verbindung.

Die Abwinklung befindet sich im Abstandsraum zwischen den beabstandeten Schienen und erstreckt sich ausgehend von einer mit einem Deckel verschließbarem Gehäuseoberseite nach oben, um einen ungehinderten elektrischen Anschluss mit an sich bekannten Schraubklemmen oder dergleichen zu ermöglichen.

Im vorerwähnten Abstandsraum befindet sich ein Isolationsteil.

Das Isolationsteil, welches eine relativ langestreckte Form aufweist, besitzt an seinen Längsseiten jeweils eine Aussparung zur führenden Aufnahme eines Abschnitts des jeweiligen abgewinkelten flächigen Außenanschlusses.

Hierfür sind im Isolationsteil in seinen Längsseiten zwei gegenüberliegende Rücksprünge vorhanden, in welche der jeweilige Abschnitt des Außenanschlusses eintaucht.

Im Bereich der Rücksprünge, insbesondere an diese angrenzend, weist das Isolationsteil wenigstens zwei, in Längsrichtung gegenüberliegende Nuten zum Fixieren jeweils eines Einsatzteils auf, welches dann den jeweiligen Rücksprung bündig verschließt und der Arretierung des entsprechenden abgewinkelten Außenanschlusses dient.

Weiterhin ist unter seitlichem Umschließen der flächigen Außenanschlüsse eine elastische Dichtung vorgesehen, welche sich oberhalb des Isolationsteils befindet.

Der Deckel des Gehäuses der Anordnung besitzt eine Öffnung für die Außenanschlüsse, d.h. es können die entsprechenden flächigen Abschnitte den Deckel durchdringen, so dass die Abschnitte für die Anschlussmittel, z.B. Schrauben oder dergleichen zugänglich sind.

Die Öffnung im Deckel ist dabei auch so ausgebildet, dass ein Isolationssteg und die Dichtung hindurchtreten bzw. zur Anlage kommen können.

Eine erfindungsgemäße Isolierkappe mit Längsschlitzen für das Hindurchführen der flächigen Außenanschlüsse umgreift die Dichtung und den Isolationssteg, wobei die Isolierkappe mit dem Deckel kraftschlüssig verbindbar ist. Hierdurch erfolgt eine entsprechende Pressung der aus elastischem Material gefertigten Dichtung. Die Dichtung kommt mithin in guten Kontakt mit den abzudichtenden Flächen und erfüllt ihre gewünschten Eigenschaften auch über einen längeren Betriebszeitraum der Anordnung.

In einer Ausbildung der Erfindung weist die Isolierkappe einen nach außen vorspringenden, in Richtung der Außenanschlüsse orientierten, umlaufenden Stegring auf. Dieser Stegring sichert die erforderlichen Trennungsabstände zwischen den sich gegenüberliegenden flächigen Außenanschlüssen bzw. der Umgebung.

Bei einer Ausbildung weisen die Endabschnitte der flächigen Außenanschlüsse schlitzartige, insbesondere konisch verlaufende Einkerbungen zur Aufnahme von Anschlussschrauben auf. Durch die Schrägflächen der konischen Ausführungsform ergibt sich eine Selbstzentrierung beim Einführen entsprechender Schraubbolzen oder dergleichen Mittel, was die Montage der weiteren Anschlussteile vereinfacht.

Die Außenanschlüsse sind bevorzugt als Anschlussbleche, z.B. aus Kupfermaterial ausgeführt, wobei die Abwinklung zwischen dem jeweiligen inneren Abschnitt und dem jeweiligen äußeren Abschnitt im Wesentlichen 90° beträgt.

In Weiterbildung der Erfindung ist der Isolationssteg integraler Bestandteil des Isolationsteils, wobei das Isolationsteil im Montagezustand unterhalb und der Isolationssteg überwiegend oberhalb des Deckels befindlich ist. Der Isolationssteg taucht also in den außen liegenden Abstandsraum zwischen den flächigen Außenanschlüssen ein und vergrößert die Trennstrecke.

Bei einer Alternative kann der Isolationssteg Bestandteil der Isolierkappe sein und in einen Schlitz der flächigen, elastischen Dichtung eintauchen.

Über den Deckel und die fixierte Isolierkappe nebst Einsatzteil werden die abgewinkelten, flächigen Außenanschlüsse mechanisch gehalten.

Bei einer Ausführungsform der Erfindung befinden sich die Wickel der Leistungskondensatoren unterhalb der beabstandeten Schienen im Gehäuse.

Die Erfindung soll nachstehend anhand eines Ausführungsbeispiels sowie unter Zuhilfenahme von Figuren näher erläutert werden.

Hierbei zeigen:
- Fig. 1: eine perspektivische Draufsicht des niederinduktiven elektrischen Außenanschlusses ohne Gehäuse und im Gehäuse befindlichen Kondensatorwickeln mit erkennbaren flächigen, abgewinkelten äußeren Anschlusselementen sowie der Verschienung;
- Fig. 2: eine Längsseitenansicht der Ausbildung eines niederinduktiven elektrischen Außenanschlusses gemäß Ausführungsbeispiel gemäß Fig. 1;
- Fig. 3: eine Seitenansicht auf eine Anordnung ähnlich der Darstellung nach Fig. 2, wobei im Unterschied zur Ansicht nach Fig. 1 der Deckel des ansonsten nicht dargestellten Gehäuses gezeigt ist, und
- Fig. 4: eine perspektivische Draufsicht auf die Außenanschluss-Konfiguration gemäß der Erfindung mit Deckel und aufgesetzter Isolierkappe nebst Isolationssteg und dem umlaufenden Stegring.

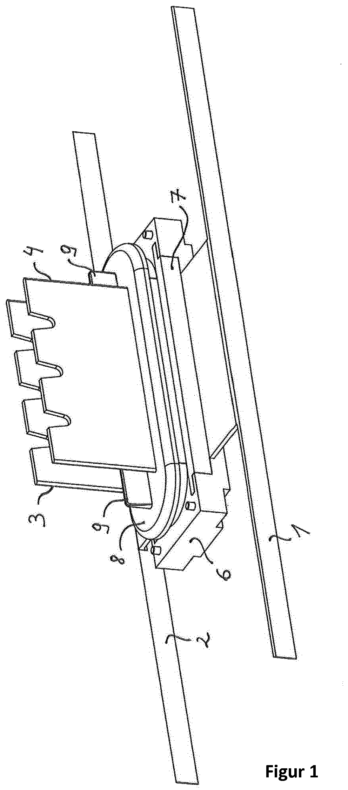

Der niederinduktive elektrische Außenanschluss für in einem nicht gezeigten Gehäuse angeordnete Wickel elektrischer Leistungskondensatoren gemäß Fig. 1 umfasst schienenartige innere Anschlussmittel 1 und 2. Diese sind ebenso wie der Außenanschluss als niederinduktive Verschienung ausgeführt.

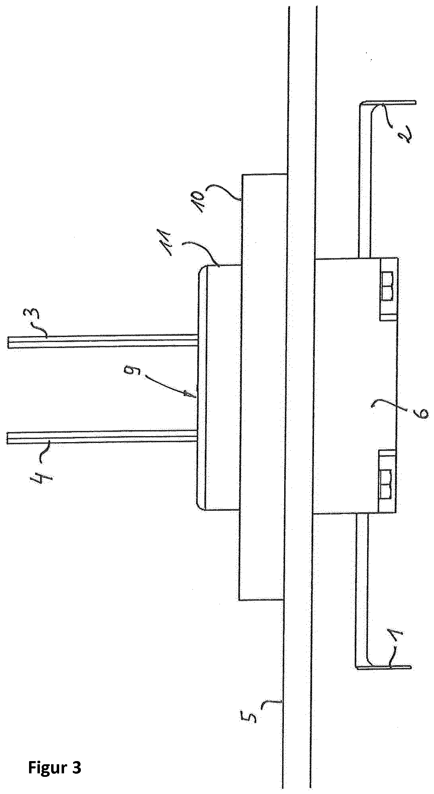

Der jeweilige Außenanschluss 3; 4 ist flächig ausgebildet und weist jeweils eine in den Fig. 1 bis 3 erkennbare Abwinklung auf.

Insofern bestehen also die Außenanschlüsse 3; 4 aus einem ersten, in der Darstellung nach Fig. 1 quasi waagerecht verlaufenden Abschnitt und einem zweiten, in der Darstellung nach Fig. 1 quasi vertikal verlaufenden Abschnitt.

Die internen Anschlussmittel mit den Schienen 1; 2 stehen mit dem waagerechten Abschnitt der abgewinkelten flächigen Außenanschlüsse 3; 4 in Verbindung.

Die Abwinklung erstreckt sich hierbei in den Abstandsraum zwischen den Schienen 1; 2. Weiterhin erstrecken sich die vertikalen Abschnitte der Außenanschlüsse 3; 4 ausgehend von einer mit einem Deckel verschließbaren Gehäuseoberseite nach oben.

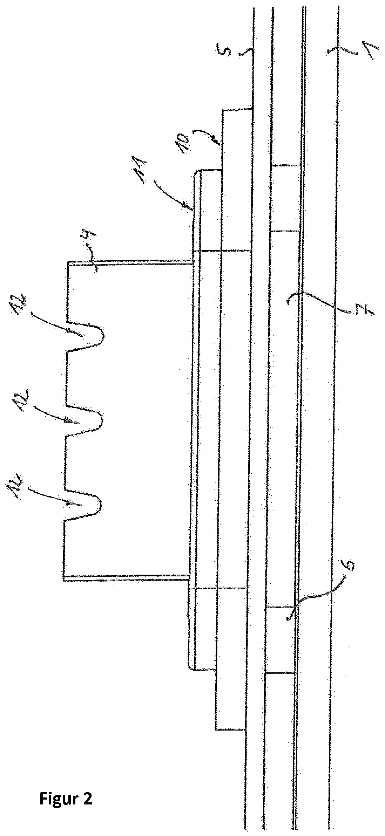

Der Deckel 5 ist in den Fig. 2 bis 4 dementsprechend dargestellt.

Im Abstandsraum zwischen den Schienen 1; 2 befindet sich noch ein Isolationsteil 6, das sich bezogen auf den Deckel 5 als Unterteil darstellt.

Die Längsseiten des bevorzugt rechteckförmigen Isolationsteils 6 weisen jeweils eine Aussparung zur führenden Aufnahme eines Abschnitts des jeweiligen abgewinkelten flächigen Außenanschlusses 3; 4 auf.

Bevorzugt taucht der eigentliche, die Abwinklung bildende Bereich in diese vorerwähnte Aussparung ein.

Im Bereich der Rücksprünge des Isolationsteils 6 sind mindestens zwei, in Längsrichtung gegenüberliegende Nuten zum Fixieren jeweils eines Einsatzteils 7 vorhanden. Das Einsatzsteil 7 weist Verlängerungsabschnitte auf, die in jeweilige Nuten im Sinne einer Nut-Feder-Anordnung eingreifen. Die Einsatzteile verschließen demgemäß den jeweiligen Rücksprung im Isolationsteil 6 unter gleichzeitigem Bilden einer Fixierung des entsprechenden waagerechten oder vertikalen Abschnitts der Außenanschlüsse 3; 4.

Unter seitlichem Umschließen der vertikalen Abschnitte der flächigen Außenanschlüsse 3, 4 ist eine elastische Dichtung 8 vorgesehen, welche sich oberhalb des Isolationsteils 6 befindet.

Der Deckel 5 des Gehäuses besitzt eine in den Figuren nicht gezeigte Öffnung für die Außenanschlüsse 3, 4 sowie zur Aufnahme eines Isolationsstegs 9 und der Dichtung 8.

Die Dichtung 8 wiederum weist einen Längsschlitz auf, welcher der Form des Steges 9 entspricht. Hierdurch wird die Dichtung nochmals geführt, positioniert und bis zur kompletten Montage gehalten.

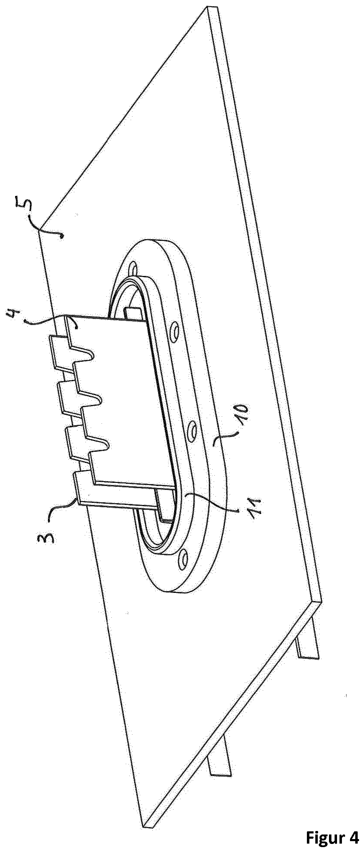

Darüber hinaus umfasst die erfindungsgemäße Lösung eine Isolierkappe 10 mit Längsschlitzen für das Hindurchführen der vertikalen Abschnitte der flächigen Außenanschlüsse 3; 4. Die Isolierkappe 10 umgreift im Montagezustand die Dichtung 8 und den Isolationssteg 9, wobei die Isolierkappe 10 mit dem Deckel 5 kraftschlüssig verbindbar ist, wie die Fig. 4 zeigt.

Die Isolierkappe 10 deckt mit einer entsprechenden Ausformung bei einer Ausführungsform auch den Isolationssteg 9 ab.

Weiterhin weist die Isolierkappe 10 einen nach außen vorspringenden, in Richtung der Außenanschlüsse 3; 4 orientierten, umlaufenden Stegring 11 zum Erhalt der gewünschten elektrischen Eigenschaften der Gesamtanordnung auf.

Die Endanschnitte des jeweiligen vertikalen Teils der flächigen Außenanschlüsse 3; 4 besitzen schlitzartige Kerben 12 zur Aufnahme von nicht gezeigten Anschlussschrauben oder Anschlussbolzen. Die schlitzartigen Kerben können auch einen nach unten sich verengenden konischen Verlauf besitzen, um ein Selbstzentrieren und leichteres Einführen entsprechender mechanischer Verbindungsmittel zu gestatten.

Die Außenanschlüsse sind bei einer erfindungsgemäßen Ausführungsform als Kupferanschlussbleche mit einer Dicke von im Wesentlichen 4mm realisiert, wobei die Abwinklung zwischen dem jeweiligen inneren, waagerechten Abschnitt und dem jeweiligen äußeren, vertikalen Abschnitt im Wesentlichen 90° beträgt.

Bei einer Ausführungsform kann der Isolationssteg 9 integraler Bestandteil des Isolationsteils 6 sein, wobei das Isolationsteil 6 im Montagezustand unterhalb und der Isolationssteg 9 überwiegend oberhalb des Deckels 5 befindlich ist.

Der Isolationssteg 9 kann aber auch Bestandteil der Isolierkappe 10 sein.

Über den Deckel 5 und die fixierte Isolierkappe 10 nebst Einsatzteil 7 werden die abgewinkelten flächigen Außenanschlüsse 3; 4 mechanisch gehalten und fixiert.

## Patentansprüche

1. Niederinduktiver elektrischer Außenanschluss für in einem Gehäuse angeordnete Wickel elektrischer Leistungskondensatoren, wobei die internen Anschlussmittel (1; 2) und der Außenanschluss als niederinduktive Verschienung ausgebildet sind und der jeweilige Außenanschluss (3; 4) flächig ausgeführt ist sowie jeweils eine Abwinklung aufweist,
wobei die internen Anschlussmittel zwei beabstandete Schienen (1; 2) aufweisen, wobei jede Schiene mit einem der abgewinkelten, flächigen Außenanschlüsse (3; 4) in Verbindung steht, die Abwinklung sich im Abstandsraum zwischen den Schienen (1; 2) befindet und sich ausgehend von einer mit einem Deckel (5) verschließbaren Gehäuseoberseite weiter nach oben erstreckt,
**dadurch gekennzeichnet, dass**,
sich im Abstandsraum ein Isolationsteil (6) befindet, dessen Längsseiten jeweils eine Aussparung zur führenden Aufnahme eines Abschnitts des jeweiligen abgewinkelten flächigen Außenanschlusses (3; 4) besitzen, wobei hierfür das Isolationsteil (6) in seinen Längsseiten zwei gegenüberliegende Rücksprünge aufweist, in welche der jeweilige Abschnitt des Außenanschlusses (3; 4) eintaucht,
weiterhin das Isolationsteil (6) im Bereich der Rücksprünge mindestens zwei, in Längsrichtung gegenüberliegende Nuten zum Fixieren jeweils eines Einsatzteils (7) besitzt, welches jeweils den jeweiligen Rücksprung bündig verschließt,
unter seitlichem Umschließen der flächigen Außenanschlüsse (3; 4) eine elastische Flächendichtung (8) vorgesehen ist, welche sich oberhalb des Isolationsteils (6) befindet, wobei der Deckel (5) des Gehäuses eine Öffnung für die Außenanschlüsse (3; 4) sowie zur Aufnahme eines Isolationsstegs (9) und der Dichtung (8) besitzt und
eine Isolierkappe (10) mit Längsschlitzen für das Hindurchführen der flächigen Außenanschlüsse (3; 4) die Dichtung (8) und den Isolationssteg (9) umgreift, wobei die Isolierkappe (10) mit dem Deckel (5) kraftschlüssig verbindbar ist.

2. Niederinduktiver elektrischer Außenanschluss nach Anspruch 1, **dadurch gekennzeichnet, dass**
die Isolierkappe (10) einen nach außen vorspringenden, in Richtung der Außenanschlüsse (3; 4) orientierten, umlaufenden Stegring (11) aufweist.

3. Niederinduktiver elektrischer Außenanschluss nach Anspruch 1 oder 2,
**dadurch gekennzeichnet, dass**
die Endabschnitte der flächigen Außenanschlüsse (3; 4) schlitzartige Einkerbungen (12) zur Aufnahme von Anschlussmitteln, insbesondere Anschlussschrauben oder Anschlussbolzen besitzen.

4. Niederinduktiver elektrischer Außenanschluss nach einem der vorangegangenen Ansprüche,
**dadurch gekennzeichnet, dass**
die Außenanschlüsse (3; 4) als Anschlussbleche ausgeführt sind, wobei die Abwinklung zwischen dem jeweiligen inneren Abschnitt und dem jeweiligen äußeren Abschnitt der Außenanschlüsse im Wesentlichen 90° beträgt.

5. Niederinduktiver elektrischer Außenanschluss nach einem der vorangegangenen Ansprüche,
**dadurch gekennzeichnet, dass**
der Isolationssteg (9) integraler Bestandteil des Isolationsteils (6) ist, wobei das Isolationsteil (6) im Montagezustand unterhalb und der Isolationssteg (9) überwiegend oberhalb des Deckels (5) befindlich ist.

6. Niederinduktiver elektrischer Außenanschluss nach einem der Ansprüche 1 bis 4,
**dadurch gekennzeichnet, dass**
der Isolationssteg (9) Bestandteil der Isolierkappe (10) ist.

7. Niederinduktiver elektrischer Außenanschluss nach einem der vorangegangenen Ansprüche,
**dadurch gekennzeichnet, dass**
über den Deckel (5) und die fixierte Isolierkappe (10) nebst Einsatzteil (7) die abgewinkelten flächigen Außenanschlüsse (3; 4) mechanisch gehalten sind.

8. Niederinduktiver elektrischer Außenanschluss nach einem der vorangegangenen Ansprüche,
**dadurch gekennzeichnet, dass**
sich die Wickel der Leistungskondensatoren unterhalb der beabstandeten Schienen (1; 2) im Gehäuse befinden.

## Claims

1. A low-inductance electric outer connection for coils of electric power capacitors arranged in a housing,
wherein internal connection devices (1; 2) and the outer connection are configured as low-inductivity rails and a respective outer connection (3; 4) is configured flat and respectively includes a shoulder,
wherein the internal connection devices include two offset rails (1; 2), wherein each rail is connected with one of the angled flat outer connections (3; 4), the angle arrangement is arranged in an offset space between the rails (1; 2) and extends further upward from an upper side of the housing that is closable by a cover (5),
**characterized in that**
an insulation element (6) is arranged in the offset space wherein longitudinal sides of the insulation element respectively include a recess configured to guide and receive a section of the respective angled flat outer connection (3; 4), wherein
the insulation element (6) includes two opposite recesses in its longitudinal sides, wherein the respective section of the outer connection (3; 4) penetrates into the recesses,
the insulation element (6) includes at least two grooves in the portion of the recesses wherein the at least two grooves are arranged opposite to one another in the long direction respectively for fixing an insert (7) which respectively closes the respective recess flush,
laterally enveloping the flat outer connection (3; 4) an elastic flat gasket (8) is provided, which is arranged above the insulation element (6), wherein the cover (5) of the housing includes an opening for the outer connection (3; 4) and for receiving an insulation bar (9) and the gasket (8), and
an insulation cap (10) with longitudinal slots for passing the flat outer connection (3; 4) through envelopes the gasket the insulation bar (9), wherein the insulation cap (10) is connectable with the cover (5) in a friction-locking manner.

2. The low inductivity electrical outer connection according to claim 1,
**characterized in that**
the insulation cap (10) includes an outward protruding enveloping bar ring (11) that is oriented towards the outer connections (3; 4).

3. The low inductivity electrical outer connection according to claim 1 or 2,
**characterized in that**
the end sections of the flat outer connection (3; 4) include slot-shaped notches (12) configured to receive connection devices, in particular connection screws or connection bolts.

4. The low inductivity electrical outer connection according to one of the preceding claims,
**characterized in that**
the outer connections (3; 4) are configured as connection plates, wherein the angle section between the respective inner section and the respective outer section of the outer connections is essentially 90 degrees.

5. The low inductivity electrical outer connection according to one of the preceding claims,
**characterized in that**
the insulation bar (9) is an integral component of the insulator (6), wherein the insulator (6) is arranged in an assembled condition below the cover (5), and the insulation bar (9) is arranged substantially above the cover (5).

6. The low inductivity electrical outer connection according to one of the claims 1 through 4,
**characterized in that**
the insulation bar (9) is part of an insulation cap (10).

7. The low inductivity electrical outer connection according to one of the preceding claims,
**characterized in that**
the angled flat outer connections (3; 4) are mechanically supported by the cover (5) and the fixed insulation cap (10) including the insert (7).

8. The low inductivity electrical outer connection according to one of the preceding claims,
**characterized in that**
the windings of the power capacitors are arranged below the offset rails (1; 2) in the housing.

## Revendications

1. Connecteur électrique extérieur faiblement inductif pour des bobinages, agencés dans un boîtier, de condensateurs électriques de puissance, les moyens de connexion internes (1 ; 2) et le connecteur extérieur étant réalisés sous forme d'ensemble de rails à faible inductivité et le connecteur extérieur respectif (3 ; 4) étant réalisé de forme surfacique et présentant un coudage respectif,
dans lequel
les moyens de connexion internes comprennent deux rails espacés (1 ; 2), chaque rail étant en liaison avec l'un des connecteurs extérieurs surfaciques coudés (3 ; 4), le coudage se trouvant dans l'espacement entre les rails (1 ; 2) et s'étendant vers le haut à partir d'une face supérieure de boîtier refermable par un couvercle (5),
**caractérisé en ce que**
une partie isolante (6) se trouve dans l'espacement, dont les côtés longitudinaux possèdent chacun une échancrure pour la réception guidée d'une portion du connecteur extérieur surfacique coudé (3 ; 4) respectif, et à cet effet la partie isolante (6) présente deux retraits en regard dans ses côtés longitudinaux, retraits dans lesquels vient plonger la portion respective du connecteur extérieur (3 ; 4),
la partie isolante (6) possède en outre au moins deux gorges en regard dans la direction longitudinale situées au niveau des retraits et destinées à fixer une partie formant insert (7) respective qui referme avec affleurement le retrait respectif,
un joint d'étanchéité (8) élastique surfacique est prévu en enfermant latéralement les connecteurs extérieurs surfaciques (3 ; 4), joint qui se trouve au-dessus de la partie isolante (6), le couvercle (5) du boîtier présentant une ouverture pour les connecteurs extérieurs (3 ; 4) et pour recevoir une barrette isolante (9) et le joint d'étanchéité (8), et
un capuchon isolant (10) présentant des fentes longitudinales pour faire traverser les connecteurs extérieurs surfaciques (3 ; 4) entoure le joint d'étanchéité (8) et la barrette isolante (9), le capuchon isolant (10) pouvant être relié par coopération de force avec le couvercle (5).

2. Connecteur électrique extérieur faiblement inductif selon la revendication 1,
**caractérisé en ce que**
le capuchon isolant (10) présente un anneau de barrette (11) périphérique qui fait saillie vers l'extérieur et qui est orienté en direction des connecteurs extérieurs (3 ; 4).

3. Connecteur électrique extérieur faiblement inductif selon la revendication 1 ou 2,
**caractérisé en ce que**
les portions d'extrémité des connecteurs extérieurs surfaciques (3 ; 4) possèdent des entailles (12) en forme de fente pour recevoir des moyens de raccordement, en particulier des vis de raccordement ou des boulons de raccordement.

4. Connecteur électrique extérieur faiblement inductif selon l'une des revendications précédentes,
**caractérisé en ce que**
les connecteurs extérieurs (3 ; 4) sont réalisés sous forme de tôles de raccordement, le coudage entre la portion intérieure respective et la portion extérieure respective des connecteurs extérieurs étant sensiblement de 90°.

5. Connecteur électrique extérieur faiblement inductif selon l'une des revendications précédentes,
**caractérisé en ce que**
la barrette isolante (9) fait partie intégrale de la partie isolante (6), la partie isolante (6) se situant, dans l'état monté, au-dessous du couvercle (5) et la barrette isolante (9) se situant majoritairement au-dessus dudit couvercle.

6. Connecteur électrique extérieur faiblement inductif selon l'une des revendications 1 à 4,
**caractérisé en ce que**
la barrette isolante (9) fait partie du capuchon isolant (10).

7. Connecteur électrique extérieur faiblement inductif selon l'une des revendications précédentes,
**caractérisé en ce que**
les connecteurs extérieurs (3 ; 4) surfaciques coudés sont retenus mécaniquement par le couvercle (5) et par le capuchon isolant (10) fixé, y compris la partie formant insert (7).

8. Connecteur électrique extérieur faiblement inductif selon l'une des revendications précédentes,
**caractérisé en ce que**
les bobinages des condensateurs de puissance se situent au-dessous des rails espacés (1 ; 2) dans le boîtier.
